# EUROPEAN PATENT APPLICATION

(11) **EP 4 163 815 A1**
(43) Date of publication of application: **12.04.2023**
(21) Application number: 22200422.8
(22) Date of filing: 07.10.2022
(51) Int. Cl.: G06F 40/20, G06F 40/30

(54) **TEXTUAL CONTENT EVALUATION USING MACHINE LEARNED MODELS**

(30) Priority: 08.10.2021 US 202163253887 P
(71) Applicant: MOTIVE8 LEARNING LTD. D/B/A PROGRESSAY, London E16 2DQ (GB)
(72) Inventor: ALQADERI, Moktar, London (GB); SHARIF, Sainab, London (GB)
(74) Representative: Gillott-Jones, Nathan Philip

(57) **Abstract**

The present disclosure describes systems and methods for evaluating content using a machine learned model. In some examples, a supervised learning machine learned model may be used. In some examples, an unsupervised learning machine learned model may be used. In operation, a computing device may receive textual content from a user device. The computing device may, using the machine learned model, analyze the textual content and determine a content evaluation, in some examples, including a content score, for the textual content. In some examples, the analysis includes extracting features, metrics, or combinations thereof, of the textual content.

## Description

### FIELD

The present disclosure relates generally to systems and methods for content evaluation, such as evaluating textual content for scoring or marking purposes.

### BACKGROUND

In recent years, the application of artificial intelligence (AI), and more specifically, machine learning (an application of AI) to education has transformed and fundamentally changed the education system, from teaching and learning, to research and exploration. For example, machine learning has helped students better enjoy the learning process and have a better understanding of learning goals and outcomes with their instructors. Machine learning has also aided educators to spot struggling or at-risk students earlier and take, in some instances, corrective action to improve success and retention. Machine learning has further assisted researchers in accelerating their research endeavors aimed at new discoveries and deeper insights. From kindergarten and primary school, to higher education and beyond, machine learning has had a positive impact and global reach on education. Despite its positive impact, machine learning's application to education is incomplete, and there remain notable shortcomings and unaddressed issues.

In particular, a gap remains with respect to using machine learning to assist with instructor efficiency in grading, as well as accuracy and reliability of assessment, of a student's work (e.g., essay, etc.). In this regard, while machine learning has had a positive impact on many aspects of the education pipeline, many instructors, teachers, and the like, continue to rely exclusively on manual grading for evaluation of a student's work. In some instances, manual review and evaluation of a student's work is time consuming, variable based on who the evaluator is, and can lead to inconsistent results across students.

Accordingly, it may be desirable to provide technological solutions to facilitate a reduction in time spent on, and enhance the accuracy and reliability of, content evaluation using machine-learning based marking.

### BRIEF SUMMARY

Aspects and features of the present disclosure are set out in the appended claims.

### OVERVIEW OF DISCLOSURE

The present application includes a computer-implemented method for content evaluation, such as evaluating textual content for scoring or marking purposes. The method includes analyzing, by a processor communicatively coupled to memory, textual content using a machine learned model trained using at least a plurality of textual training content, wherein the analysis comprises extracting features, metrics, or combinations thereof of the textual content, wherein the textual content comprises one or more words of a plurality of words, and wherein each textual training content of the plurality of textual training content comprises a training evaluation; and based at least in part on the analysis including the extracted features and metrics, automatically determining, by the processor, a content evaluation for the textual content.

Additionally, a system for evaluating textual content is disclosed. The system includes a processor, communicatively coupled to a user device, and configured to receive textual content produced by user from the user device, wherein the textual content comprises one or more words of a plurality of words and is generated in response to prompt based on a topic. The processor, communicatively coupled to memory, is further configured to analyze the textual content using a machine learned model. The processor is further configured to, based on the analysis, determine a content evaluation for the textual content, wherein the content evaluation is based in part on an assessment of an understanding by the user of the topic.

Moreover, a computer readable medium (e.g. a non-transitory computer readable medium) encoded with instructions that, when executed, cause a system to perform actions for content evaluation is disclosed. The actions include analyzing the textual content using a machine learned model trained using textual training content; and based at least in part on the analysis, automatically determining a content evaluation for the textual content. The computer readable medium may comprise instructions which, when executed by a processing element of a computing device, cause the computing device to perform any of the methods described herein.

Systems and methods for evaluating content using a machine learned model are disclosed. In some examples, a supervised learning machine learned model may be used. In some examples, an unsupervised learning machine learned model may be used. In operation, a computing device may receive textual content from a user device. The computing device may, using the machine learned model, analyze the textual content and determine a content evaluation, in some examples, including a content score, for the textual content. In some examples, the analysis includes extracting features, metrics, or combinations thereof, of the textual content.

The techniques described herein allow for the accurate, reliable, and efficient evaluation of textual content using a machine learned model. In particular, analyzing textual content using a machine learned model is a more desirable approach to content evaluation, as it may facilitate a reduction in time spent on, and enhance the accuracy and reliability of content marking, lead to a more fair and unbiased content evaluation outcome. The content evaluation methods described herein can be used to automatically, and accurately analyze textual content, which can allow for consistency across work by multiple users, faster analysis, and the like. In particular, as compared to the manual grading process currently performed by many teachers, institutions, and evaluators, the systems and methods described here can result in a more accurate, fair, and fast evaluation across many different subjects or topics.

### BRIEF DESCRIPTION OF THE DRAWINGS

Reference is now made to the following descriptions taken in conjunction with the accompanying drawings, in which:
FIG. 1 is a schematic illustration of a system for content evaluation using machine learning, in accordance with examples described herein;
FIG. 2 is a flowchart of a method for content evaluation using machine learning, in accordance with examples described herein;
FIG. 3 is a flowchart of a method for content evaluation using a supervised learning machine learned model, in accordance with examples described herein;
FIG. 4 is a flowchart of a method for content evaluation using an unsupervised learning machine learned model, in accordance with examples described herein;
FIG. 5 is a block diagram of ground truth content in a structured relational knowledge graph in a relational data store, in accordance with examples descried herein;
FIG. 6 is a schematic diagram of an example computing system, in accordance with examples described herein; and,
FIG 7 is a block diagram illustrating content evaluation using machine learning as described herein.

### DETAILED DESCRIPTION

Certain details are set forth herein to provide an understanding of described embodiments of technology. However, other examples may be practiced without various ones of these particular details. In some instances, well-known computing system components, virtualization components, circuits, control signals, timing protocols, and/or software operations have not been shown in detail in order to avoid unnecessarily obscuring the descried embodiments. Other embodiments may be utilized, and other changes may be made, without departing from the scope of the subject matter presented herein.

The present disclosure generally relates to systems and methods for content evaluation, and more specifically, for analyzing textual content, such as essays, written work product, or the like, to determine a textual content evaluation, comprising a content score, using a machine learned model trained via supervised learning, unsupervised learning, or combinations thereof.

For example, a computing device including a processor, communicatively coupled to a user device, may receive textual content from the user device, where the textual content includes a plurality of words. The computing device having a content evaluation machine learned model and communicatively coupled to the user device may analyze the textual content including extracting features, metrics, or combinations thereof, of the textual content. In some examples, the textual content may include academic content, written content, one or more images, an essay, an article, a dissertation, a manuscript, a paper, a thesis, a treatise, an exposition, a composition, or combinations thereof. In some instances, the textual content may be generated in response to a prompt or question, such as in response to an examination on a particular subject, and may be used to demonstrate a user understanding of the particular subject. For example, the textual content may be generated by students during an examination process for qualifying examinations (e.g., law school bar exam, accounting qualifications, etc.) and/or within an academic environment, such as school.

The computing device having the content evaluation machine learned model and communicatively coupled to the user device may, based at least in part on the analysis including the extracted features and metrics, determine a content evaluation for the textual content. In some examples, the content evaluation machine learned model may be an unsupervised learning machine learned model, and may be trained using textual training content. In some examples, the content evaluation machine learned model may be a supervised learning machine learned model, and may be trained using the textual training content. In some examples, the textual training content may include one or more words of a plurality of words. In some examples, the textual training content may include academic content, written content, one or more images, an essay, an article, a dissertation, a manuscript, a paper, a thesis, a treatise, an exposition, a composition, or combinations thereof.

In some examples, the content evaluation may include a content score out of a plurality of content scores for the textual content. In some examples, the content score may be a continuous variable. In some examples, the content score may be selected from a plurality of predetermined values. Additionally and/or alternatively, in some examples, the content evaluation may include comments regarding the textual content.

A display, communicatively coupled to the processor, may, in some examples, provide the content evaluation for manual updating, where the manual updating, in some examples, may include alteration of the content evaluation. In some examples, the alteration of the content evaluation may include an alteration of the content score. In some examples, based on the determined content evaluation, the computing device may provide recommendations for corrective actions to be taken by the instructor (e.g., teacher, evaluator, grader, etc.).

The content evaluation may be used to automatically, and accurately, analyze textual content, which can allow for consistency across work by multiple users, faster analysis, and the like. In particular, as compared to the manual grading process currently performed by many teachers, institutions, and evaluators, the systems and methods described here can result in a more accurate, fair, and fast evaluation across many different subjects or topics.

Specifically, current methods of textual content evaluation include manual review, analysis, and scoring of content. However, while time-tested, manual grading suffers from various shortcomings, including unreliability, inefficiency, and inconsistency. With respect to manual grading and reliability, according to recent research, only 52% of students receive a "definitive" General Certificate of Secondary Education grade (e.g., mark, score, etc.) in English. This means that almost half of students may have received a different grade than initially awarded, had a different evaluator (e.g., teacher, instructor, professor, grader, examiner, etc.) graded their exam (e.g., content). Similarly, additional research shows that up to 25% of student exam grades would be changed if the exams were graded by a senior evaluator. Additionally, and with respect to efficiency, additional studies have shown that over 61% of teachers think they spend too much time grading.

Techniques described herein include a content evaluation system for analyzing textual content to determine a textual content evaluation, the textual content evaluation including a content score. In some examples, a machine learned model trained via supervised learning, unsupervised learning, or combinations thereof, may be used to analyze the textual content and determine the content evaluation.

The user device may send textual content to a computing device for analysis. In some examples, and as described, the textual content may include one or more words of a plurality of words. In some examples, the textual content may include academic content, written content, one or more images, an essay, an article, a dissertation, a manuscript, a paper, a thesis, a treatise, an exposition, a composition, or combinations thereof. In some examples, the textual content may be sent by a user of the user device, such as a student, customer, administrator, teacher, tutor, teaching assistant, or the like.

The computing device may be communicatively coupled to the user device and may comprise a content evaluation machine learned model trained using supervised learning, unsupervised learning, or combinations thereof, to analyze and evaluate textual content. As should be appreciated, and as used herein, machine learning is meant to encompass artificial intelligence and other related technologies. In some instances, the computing device may receive the textual content and the content evaluation machine learned model may analyze the textual content. In some instances, based on the analysis, the content evaluation machine learned model may determine a content evaluation for the textual content.

In some examples, a supervised learning machine learned model may perform the analysis of the textual content. In some examples, the analysis of the textual content by the supervised learning machine learned model may be based on performing metric extraction on the textual content, where the metric extraction includes extracting reading metrics, writing metrics, or combinations thereof, from the textual content. In some examples, the analysis of the textual content by the supervised learning machine learned model may be based on performing feature extraction on the textual content, wherein the feature extraction includes determining and/or triangulating the occurrence of language devices, inference verbs, common phrases, or combinations thereof in the textual content. In some examples, the analysis of the textual content by the supervised learning machine learned model may be based on identifying and/or extracting one or more additional and/or alternative linguistic tokens. As should be appreciated, while feature spotting is discussed, it should be appreciated that triangulation may also be used to perform certain functions described herein, including determining the occurrence of various linguistic tokens. In some examples, triangulation may occur using one or more various classifiers, including but not limited to Naive Bayes classifiers, Multinomial Naive Bayes classifiers, Gaussian Naive Bayes classifiers, or combinations thereof.

In some examples, the analysis of the textual content by the supervised learning machine learned model may be based on performing term frequency-inverse document frequency transformation (TF-IDF) on the textual content, wherein the TF-IDF includes determining a numerical statistic indicative of a level of importance for each of the one or more of words of the plurality of words in the textual content. Additionally and/or alternatively, in some examples, the analysis of the textual content by the supervised learning machine learned model may be based on performing word embedding, Bidirectional Encoder Representations from Transformers (BERT), Chunking, tokenization, lemmatization, other similar techniques, or combinations thereof.

In some examples, evaluation and/or analysis of the textual content by the supervised learning machine learned model may be based on methods, not exclusive to natural language processing (NLP), to determine values indicative of a level of importance for each of the one or more words of the plurality of words in the textual content, including but not limited to the above-recited techniques and/or methods.

In some examples, the analysis of the textual content by the supervised learning machine learned model may be based on performing relationship extraction on the textual content, wherein the relationship extraction includes detecting and classifying semantic relationship for each of the one or more words of the plurality of words in the textual content and each of a plurality of words in the plurality of textual training content. In some examples, the analysis of the textual content by the supervised learning machine learned model may be based on performing relationship extraction on the textual content, wherein the relationship extraction includes an lexical analysis based at least on detecting and classifying semantic relationships between lexical tokens for each of the one or more lexical tokens of the plurality of lexical tokens in the textual content and each of a plurality of lexical tokens in the plurality of textual training data.

In some examples, the analysis of the textual content by the supervised learning machine learned model may be based on performing semantic similarity on the textual content, wherein the semantic similarity includes determining a lexicographical similarity distance between each of the one or more words of the plurality of words in the textual content and each of a plurality of words in the plurality of textual training content, wherein the distance is indicative of similarity. In some examples, performing semantic similarity on the textual content may be based at least in part on determining a lexicographical similarity distance between each of the one or more lexical tokens of the of the plurality of lexical tokens in the textual content and each of the plurality of lexical tokens in the plurality of textual training content, wherein the distance is indicative of similarity.

In some examples, the analysis of the textual content by the supervised learning machine learned model may be based on performing one or more of metric extraction, feature extraction, TF-IDF transformation, relationship extraction, or semantic similarity. Additionally and/or alternatively, in some examples, the analysis of the textual content by the supervised learning machine learned model may be based on one or more natural language models, including but not limited to, metric extraction, Chunking, lemmatization, parts of speech (POS) tagging, feature extraction, TF-IDF transformation, relationship extraction, semantic similarity, combinations thereof, and/or other similar techniques. In some examples, the supervised learning machine learned model may determine, based at least on one or more of the metric extraction, TF-IDF transformation, relationship extraction, semantic similarity, or combinations thereof, the content evaluation for the textual content. In some examples, the content evaluation determined by the supervised learning machine learned model may include a content score out of a plurality of content scores for the textual content, where the content score is a continuous variable (e.g., 3.8, 4.5, 5.9, 0.12, etc.). In other words, the content score may be uniquely generated based on the assessment. Additionally and/or alternatively, in some examples, the content evaluation may include comments regarding the textual content.

In some examples, an unsupervised learning machine learned model may perform the analysis of the textual content. In some examples, the analysis of the textual content by the unsupervised learning machine learned model may be based on performing metric extraction on the textual content, where the metric extraction includes extracting reading metrics, writing metrics, or combinations thereof, from the textual content. In some examples, the analysis of the textual content by the unsupervised learning machine learned model may be based on performing feature extraction on the textual content, wherein the feature extraction includes determining and/or triangulating the occurrence of language devices, inference verbs, common phrases, or combinations thereof in the textual content. In some examples, the analysis of the textual content by the unsupervised learning machine learned model may be based on identifying and/or extracting one or more additional and/or alternative linguistic tokens. As should be appreciated, while feature spotting is discussed, it should be appreciated that triangulation may also be used to perform certain functions described herein, including determining the occurrence of various linguistic tokens. In some examples, triangulation may occur using one or more various classifiers, including but not limited to Naive Bayes classifiers, Multinomial Naive Bayes classifiers, Gaussian Naive Bayes classifiers, or combinations thereof.

In some examples, the analysis of the textual content by the unsupervised learning machine learned model may be based on performing relationship extraction on the textual content, wherein the relationship extraction includes detecting and classifying semantic relationship for each of the one or more words of the plurality of words in the textual content and each of a plurality of words in the plurality of textual training content. In some examples, the analysis of the textual content by the unsupervised learning machine learned model may be based on performing relationship extraction on the textual content, wherein the relationship extraction includes an lexical analysis based at least on detecting and classifying semantic relationships between lexical tokens for each of the one or more lexical tokens of the plurality of lexical tokens in the textual content and each of a plurality of lexical tokens in the plurality of textual training data.

In some examples, the analysis of the textual content by the unsupervised learning machine learned model may be based on performing one or more of the metric extraction, feature extraction, relationship extraction, or combinations thereof, one or more of a cosine similarity, clustering algorithm, or combinations thereof. Additionally and/or alternatively, in some examples, the analysis of the textual content by the supervised learning machine learned model may be based on one or more natural language models, including but not limited to, metric extraction, feature extraction, relationship extraction, or combinations thereof, one or more of a cosine similarity, clustering algorithm, or combinations thereof, and/or other similar techniques.

In some examples, the unsupervised learning machine learned model may determine, based at least on one or more of the metric extraction, feature extraction, relationship extraction, cosine similarity, clustering algorithm, or combinations thereof, the content evaluation for the textual content. In some examples, the content evaluation determined by the un supervised learning machine learned model may include a content score out of a plurality of content scores for the textual content, where the content score is selected from a plurality of predetermined values (e.g., 1, 2, 3, 4, 5, 6, etc.). In other words, the content score may be selected based on a predetermined value or score that the analysis believes the content is closest to, as compared to generating an individual score based on the unique factors of the content.

As described herein, in some examples, the textual content may be generated by a user in response to a prompt associated with a topic (e.g., a first topic, a second topic, etc.). In some examples, content evaluation of the textual content may be based at least in part on an assessment of an understanding by the user of the topic associated with the prompt. In some examples, the content evaluation of the textual content may be indicative of the user's understanding of the topic associated with the prompt. In some examples, the content evaluation may be indicative of and/or demonstrate a user's grammatical or formal technical writing skills and usage.

A display, communicatively coupled to the processor, may, in some examples, provide the content evaluation for manual updating, where the manual updating, in some examples, may include alteration of the content evaluation. In some examples, the alteration of the content evaluation may include an alteration of the content score.

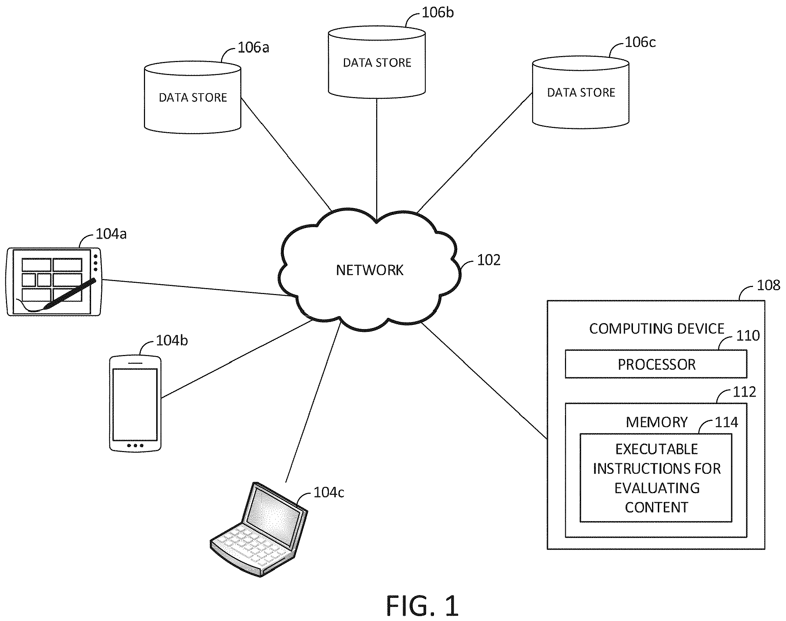

As one non-limiting example, the display may provide the content evaluation to an instructor (e.g., teacher, etc.) for manual alteration of the content evaluation. In some examples, no manual alterations may be made. In some examples, one or more alterations may be made to the content evaluation. In some examples, the content evaluation may be automatically transmitted to the student (e.g., a user of user devices 104 of FIG. 1) for display. In some examples, user devices 104 may alert the student via a notification or the like of the receipt of the content evaluation. In some examples, the content evaluation may be automatically sent to the student without manual alteration. In some examples, the content evaluation may be automatically sent to the student after manual alteration.

In this way, techniques described herein allow for the accurate, reliable, and efficient evaluation of textual content using a machine learned model.

Turing to the figures, FIG. 1 is a schematic illustration of a system **100** for content evaluation using machine learning, in accordance with examples described herein. It should be understood that this and other arrangements and elements (e.g., machines, interfaces, function, orders, and groupings of functions, etc.) can be used in addition to or instead of those shown, and some elements may be omitted altogether. Further, many of the elements described herein are functional entities that may be implemented as discrete or disturbed components or in conjunction with other components, and in any suitable combination and location. Various functions described herein as being performed by one or more components may be carried out by firmware, hardware, and/or software. For instance, and as described herein, various functions may be carried out by a processor executing instructions stored in memory.

System **100** of FIG. 1 includes user devices **104a, 104b,** and **104c** (herein collectively known as user devices **104),** data stores **106a, 106b, and 106c** (e.g., a non-transitory storage medium) (herein collectively known as data stores **106),** and computing device **108.** Computing device **108** includes processor **110,** and memory **112.** Memory **114** includes executable instructions for evaluating content **114.** It should be understood that system **100** shown in FIG. 1 is an example of one suitable architecture for implementing certain aspects of the present disclosure. Additional, fewer, and/or alternative components may be used in other examples.

It should be noted that implementations of the present disclosure are equally applicable to other types of devices such as mobile computing devices and devices accepting gesture, touch, and/or voice input. Any and all such variations, and any combinations thereof, are contemplated to be within the scope of implementations of the present disclosure. Further, although illustrated as separate components of computing device **108,** any number of components can be used to perform the functionality described herein. Additionally, although illustrated as being a part of computing device **108,** the components can be distributed via any number of devices. For example, processor **110** may be provided by one device, server, or cluster of servers, while memory **112** may be provided via another device, server, or cluster of servers.

As shown in FIG. 1, user devices **104** and computing device **108** may communicate with each other via network **102,** which may include, without limitation, one or more local area networks (LANs), wide area networks (WANs), cellular communications or mobile communications networks, Wi-Fi networks, and/or BLUETOOTH ^{®} networks. Such networking environments are commonplace in offices, enterprise-wide computer networks, laboratories, homes, educational institutions, intranets, and the Internet. Accordingly, network **102** is not further described herein. It should be understood that any number of user devices and/or computing devices may be employed within system **100** and be within the scope of implementations of the present disclosure. Each may comprise a single device or multiple devices cooperating in a distributed environment. For instance, computing device **108** could be provided by multiple server devices collectively providing the functionality of computing device **108** as described herein. Additionally, other components not shown may also be included within the network environment.

User devices **104** and computing devices **108** may have access (via network **102)** to at least one data store repository, such as data stores **106,** which stores data and metadata associated with training a content evaluation machine learned model, as well as analyzing and evaluating textual content. For example, data stores **106** may store data and metadata associated with one or more of a plurality of textual training content (e.g., exemplar essays, etc.), including in some examples, a textual training content evaluation, including a training score and/or training comments, for each textual training content of the plurality of textual training content. In some examples, data stores **106** may store data and metadata associated with a minimum number of training textual content used to train, in some examples, the machine learned model using supervised learning. In some examples, data stores **106** may store data and metadata associated with a plurality of textual training content, used to train, in some examples, the machine learned model using unsupervised learning. In some examples, the textual training content stored in data stores **106** may include no content evaluation. In some examples, the textual training content stored in data stores **106** may include a partial content evaluation. In some examples, the textual content stored in data stores **106** may include a training content evaluation. In some examples, the training textual content stored in data stores **106** may include academic content, written content, one or more images, an essay, an article, a dissertation, a manuscript, a paper, a thesis, a treatise, an exposition, a composition, or combinations thereof.

Data stores **106** may further store data and metadata associated with textual content, in some examples, received by a user device, such as user devices **104.** In some examples, the textual content stored in data stores **106** may include no content evaluation (e.g., no content score, no content comments, or combinations thereof). As one example, textual content stored in data stores 106 may include content scores but not content comments. In some examples, the textual content stored in data stores **106** may include a partial content evaluation. In some examples, the textual content stored in data stores **106** may include a content evaluation. In some examples, the textual content stored in data stores **106** may include academic content, written content, one or more images, an essay, an article, a dissertation, a manuscript, a paper, a thesis, a treatise, an exposition, a composition, or combinations thereof.

Data stores **106** may further store data and metadata associated with ground truth content (e.g., facts, quotes, images, dates, names, etc.). In some examples, the ground truth content may come from textbooks, movies, magazines, peer reviewed articles, and the like. In some examples, the ground truth content may include history, math, and science textbooks. In some examples, the ground truth content may include quotes from speeches or autobiographies. In some examples, the ground truth content may include dates and images from various timelines. In some examples, the ground truth may include facts, quotes, images, dates, names, etc. from the textual training content (e.g., from structured essays, unstructured essays, and the like). In some examples, the ground truth content may be hardcoded into data stores **106** by, for example, an instructor and/or a teacher. In some examples, the analysis of the textual content may be based at least in part on a comparison of extracted features and/or metrics to one or more ground truth content in data stores **106.**

In implementations of the present disclosure, data stores **106** is configured to be searchable for the data and metadata stored in data stores **106.** It should be understood that the information stored in data stores **106** may include any information relevant to content evaluation using a machine learned model, such as ground truth data, textual training content, textual content, and the like. As should be appreciated, data and metadata stored in data stores **106** may be added, removed, replaced, altered, augmented, etc. at any time, with different and/or alternative data. It should further be appreciated that each of data store **106a, 106b,** and/or **106c** may be updated, repaired, taken offline, etc. at any time without impacting the other data stores. It should further be appreciated that while three data stores are illustrated, additional and/or fewer data stores may be implemented and still be within the scope of this disclosure.

Information stored in data stores **106** may be accessible to any component of system **100.** The content and the volume of such information are not intended to limit the scope of aspects of the present technology in any way. Further, data stores **106** may be single, independent components (as shown) or a plurality of storage devices, for instance, a database cluster, portions of which may reside in association with computing device **108,** user devices **104,** another external computing device (not shown), another external user device (not shown), and/or any combination thereof. Additionally, data stores **106** may include a plurality of unrelated data repositories or sources within the scope of embodiments of the present technology. Data stores **106** may be updated at any time, including an increase and/or decrease in the amount and/or types of stored data and metadata.

Examples described herein may include user devices, such as user devices **104.** User devices **104** may be communicatively coupled to various components of system **100** of FIG. 1, such as, for example, computing device **108.** User devices **104** may include any number of computing devices, including a head mounted display (HMD) or other form of AR/VR headset, a controller, a tablet, a mobile phone, a wireless PDA, touchless-enabled device, other wireless (or wired) communication device, or any other device capable of executing machine-language instructions. Examples of user devices **104** described herein may generally implement the receiving or collecting of textual content (e.g., from a student, teaching assistant, tutor, customer, administrator, user, etc. of the user device) as well as the transmission of the received and/or collected textual content to a computing device, such as computing device **108** for evaluation and analysis.

Examples described herein may include computing devices, such as computing device **108** of FIG. 1. Computing device **108** may in some examples be integrated with one or more user devices, such as user devices **104,** described herein. In some examples, computing device **108** may be implemented using one or more computers, servers, smart phones, smart devices, tables, and the like. Computing device **108** may implement textual content evaluation using machine learned model. As described herein, computing device **108** includes processor **110** and memory **112.** Memory **112** includes executable instructions for content evaluation **114,** which may be used to implement textual content evaluation using machine learned model. In some embodiments, computing device **108** may be physically coupled to user devices **104.** In other embodiments, computing device **108** may not be physically coupled user devices **104** but collocated with the user devices. In further embodiments, computing device **108** may neither be physically coupled to user devices **104** nor collocated with the user devices.

Computing devices, such as computing device **108** described herein may include one or more processors, such as processor **110.** Any kind and/or number of processor may be present, including one or more central processing unit(s) (CPUs), graphics processing units (GPUs), other computer processors, mobile processors, digital signal processors (DSPs), microprocessors, computer chips, and/or processing units configured to execute machine-language instructions and process data, such as executable instructions for content evaluation **114.**

Computing devices, such as computing device **108,** described herein may further include memory **112.** Any type or kind of memory may be present (e.g., read only memory (ROM), random access memory (RAM), solid-state drive (SSD), and secure digital card (SD card)). While a single box is depicted as memory **112,** any number of memory devices may be present. Memory **112** may be in communication (e.g., electrically connected) with processor **110.** In many embodiments, the memory **112** may be non-transitory.

Memory **112** may store executable instructions for execution by the processor **110,** such as executable instructions for content evaluation **114.** Processor **110,** being communicatively coupled to user device **104,** and via the execution of executable instructions for content evaluation **114,** may analyze textual content received from a user device, such as user devices **104,** and determine a content evaluation for the textual content using a machine learned model.

In operation, to analyze received textual content using a machine learned model, processor **110** of computing device **108** may execute executable instructions for evaluating content **114.** As described herein, in some examples, textual content may include one or more of a plurality of words, and in some examples, the textual content may include academic content, written content, one or more images, an essay, an article, a dissertation, a manuscript, a paper, a thesis, a treatise, an exposition, a composition, or combinations thereof. In some examples, the machine learned model may be trained using at least a plurality of textual training content. In some examples, the textual training content may include one or more of a plurality of words, and in some examples, the textual training content may include academic content, written content, one or more images, an essay, an article, a dissertation, a manuscript, a paper, a thesis, a treatise, an exposition, a composition, or combinations thereof. In some examples, the textual training content may include a training evaluation, including in some examples, a training score, training comments, or combinations thereof.

In some examples, the textual content may be generated in response to a prompt or question, such as in response to an examination on a particular subject, and may be used to demonstrate a user understanding of the particular subject. For example, the textual content may be generated by students during an examination process for qualifying examinations (e.g., law school bar exam, accounting qualifications, etc.) and/or within an academic environment, such as school. In some examples, the textual content may be generated by students answering a homework and/or assignment prompt and/or question. In some examples, the textual content may cover one topic. In some examples, the textual content may cover more than one topic. For example, the textual content may in some examples, cover anatomy of hand (e.g., one topic). However, in some examples, the textual content may cover anatomy of the hand, wrist, and forearm (e.g., more than one topic).

In some examples, processor **110** of computing device **108** may execute executable instructions for content evaluation **114** to analyze the textual content using a supervised learning machine learned model trained at least using plurality of textual training content. In some examples, the analysis includes extracting features, metrics, or combinations thereof, of the textual content. In some examples, the analysis of the textual content by the supervised learning machine learned model using processor **110** may be based on performing metric extraction on the textual content, where the metric extraction includes extracting reading metrics, writing metrics, or combinations thereof, from the textual content. In some examples, the reading metrics are indicative of reading comprehension, including an understanding, an interpretation, or combinations thereof, of the textual content. In some examples, the reading metrics may be topic-specific. In some examples, the writing metrics are indicative of writing style, grammar, usage, structure, or combinations thereof. In some examples, the writing metrics may be topic-agnostic.

In some examples, the analysis of the textual content by the supervised learning machine learned model using processor **110** may be based on performing feature extraction on the textual content. In some examples, the feature extraction may include determining the occurrence of language devices, inference verbs, common phrases, or combinations thereof in the textual content.

In some examples, the extracted features may be based on the textual training content. In some examples, the extracted features may be predictive of the content score of the textual content. Examples of features that may be extracted include, but are not limited to, one or more of the following: word count (word_count), average length of each word (average_words_length), (num_stopword), (writer uses), average sentence length (average_sentence_length), semantic similarity top 3 (semantic_sim_top3), number of sentences (num_of_sentences), semantic similarity top 2 (semantic_sim_top2), averate word length (avg_word_length), quote count (quotes_count), semantic similarity top 6 (semantic_sim_top6), semantic similarity top 4 (semantic_sim_top4), semantic similarity top 1 (semantic_sim_top1), semantic similarity top 5 (semantic_sim_top5), (florence s), semantic similarity top 10 (semantic_sim_top10), semantic similarity top 7 (semantic_sim_top7), (finds florence), semantic similarity top 8 (semantic_sim_top8), (oh di), (di finds), (did come), semantic similarity top p (semantic_sim_top9), (loving foolish), language structure (language structure), language use (uses language), (stopped short), (dear true), (true faitihful), (moment florence), (faithful di), (entitiy_1_subjectivity _0), (little shadow), (phrase89), (old loving), (phrase85), (moment di), (di leave), (old loving foolish, (drying swollen), (short wheeled), (diogenes finds florence), (entity_2_relation_2), (faithful di did), (di did), (diogenes finds), and/or (leave di).

In some examples, the analysis of the textual content by the supervised learning machine learned model using processor **110** may be based on performing TF-IDF on the textual content. In some examples, the TF-IDF includes determining a numerical statistic indicative of a level of importance for each of the one or more of words of the plurality of words in the textual content.

In some examples, the analysis of the textual content by the supervised learning machine learned model using processor **110** may be based on performing relationship extraction on the textual content. In some examples, the relationship extraction may include detecting and classifying a semantic relationship for each of the one or more words of the plurality of words in the textual content and each of a plurality of words in the plurality of textual training content.

In some examples, the analysis of the textual content by the supervised learning machine learned model using processor **110** may be based on performing semantic similarity on the textual content. In some examples, the semantic similarity may include determining a lexicographical similarity distance between each of the one or more words of the plurality of words in the textual content and each of a plurality of words in the plurality of textual training content. In some examples, the distance is indicative of similarity. In some examples, the semantic similarity is further based on a word mover's distance (WMD) algorithm, although additional and/or alternative algorithms are contemplated to be within the scope of this disclosure.

As described herein, in some examples, the analysis of the textual content by the supervised learning machine learned model using processor **110** may be based at least in part on a comparison of extracted features and/or metrics to one or more ground truth content in a data store, such as data stores **106.** As should be appreciated, various techniques may be used and/or implemented to generate and/or curate the one or more ground truth content in data stores **106.** In some examples, processor **110** may turn the training content (e.g., structured essays, unstructured essays) into relational knowledge graphs and/or relational databases to be used, in some examples, as the ground truth for the textual content analysis.

In some examples, based at least on one or more of the metric extraction, TF-IDF transformation, relationship extraction, semantic similarity, or combinations thereof, processor **110** may determine the content evaluation for the textual content. In some examples, the content evaluation may include a content score out of a plurality of content scores for the textual content. In some examples, the content score is a continuous variable.

In some examples, feedback from users (e.g., teachers, teaching assistants, professors, educators, students, administrators, etc.) may be collected. In some examples, the users may tag comments they make against a rubric. In some examples, this data may be used to train a model, e.g., the supervised (and others) model to reproduce feedback of the same quality. In some examples, such functionality may incorporate a Chatbot-style feature, where, in some examples, it enables users (e.g., students, etc.) may interact with it and ask questions. In some examples, the data may also be used to suggest feedback statements for users (e.g., teachers) to use during grading (e.g., marking).

As one example, a user (e.g., a teacher) may grade an essay and tag the sentences "Sikes is bad," "Sikes is impatient," "Sikes is mean," "Sikes is brutal," "Sikes is a barbaric character," and/or "Sikes is abusive" with the description "Poor Understanding" and as a 2 out of 5 on the rubric. Such data may be used, as described herein, to train a model to reproduce feedback of the same quality, enable students to interact with a Chatbot-style feature to ask questions, and/or to suggestion future comment feedback for teachers while grading.

In some examples, processor **110** of computing device **108** may execute executable instructions for content evaluation **114** to analyze the textual content using an unsupervised learning machine learned model trained at least using plurality of textual training content. In some examples, the analysis includes extracting features, metrics, or combinations thereof, of the textual content. In some examples, the analysis of the textual content by the unsupervised learning machine learned model may be based on performing metric extraction on the textual content. In some examples, the metric extraction may include extracting reading metrics, writing metrics, or combinations thereof, from the textual content. As described, in some examples, the reading metrics are indicative of reading comprehension, including an understanding, an interpretation, or combinations thereof, of the textual content. In some examples, the reading metrics may be topic-specific. In some examples, the writing metrics are indicative of writing style, grammar, usage, structure, or combinations thereof. In some examples, the writing metrics may be topic-agnostic.

In some examples, the analysis of the textual content by the unsupervised learning machine learned model using processor **110** may be based on performing feature extraction on the textual content. In some examples, the feature extraction may include determining the occurrence of language devices, inference verbs, common phrases, or combinations thereof in the textual content.

As described herein, in some examples, the extracted features may be based on the textual training content. In some examples, the extracted features may be predictive of the content score of the textual content. Examples of features that may be extracted include, but are not limited to, word count (word_count), average length of each word (average_words_length), (num_stopword), (writer uses), average sentence length (average_sentence_length), semantic similarity top 3 (semantic_sim_top3), number of sentences (num_of_sentences), semantic similarity top 2 (semantic_sim_top2), averate word length (avg_word_length), quote count (quotes_count), semantic similarity top 6 (semantic_sim_top6), semantic similarity top 4 (semantic_sim_top4), semantic similarity top 1 (semantic_sim_top1), semantic similarity top 5 (semantic_sim_top5), (florence s), semantic similarity top 10 (semantic_sim_top10), semantic similarity top 7 (semantic_sim_top7), (finds florence), semantic similarity top 8 (semantic_sim_top8), (oh di), (di finds), (did come), semantic similarity top p (semantic_sim_top9), (loving foolish), language structure (language structure), language use (uses language), (stopped short), (dear true), (true faitihful), (moment florence), (faithful di), (entitiy_1_subjectivity _0), (little shadow), (phrase89), (old loving), (phrase85), (moment di), (di leave), (old loving foolish, (drying swollen), (short wheeled), (diogenes finds florence), (entity_2_relation_2), (faithful di did), (di did), (diogenes finds), and/or (leave di).

In some examples, the analysis of the textual content by the unsupervised learning machine learned model using processor **110** may be based on performing relationship extraction on the textual content. In some examples, the relationship extraction may include detecting and classifying a semantic relationship for each of the one or more words of the plurality of words in the textual content and each of a plurality of words in the plurality of textual training content.

In some examples, the analysis of the textual content by the unsupervised learning machine learned model using processor **110** may be based on performing, using at least one or more of the metric extraction, feature extraction, relationship extraction, or combinations thereof, one or more of a cosine similarity, clustering algorithm, or combinations thereof. In some examples, the clustering algorithm is an agglomerative clustering algorithm, although additional and/or alternative algorithms are contemplated to be within the scope of this disclosure.

In some examples, at least one of the metric extraction, feature extraction, relationship extraction, or combinations thereof, may be normalized by the unsupervised learning machine learned model using processor **110.** Various normalization techniques may be used, such as linear scaling, clipping, log scaling, z-score, re-scaling, min-max normalization. It should be appreciated that while several normalization techniques are discussed, additional and/or alternative normalization techniques not discussed are contemplated to be within the scope of this disclosure.

As described herein, in some examples, the analysis of the textual content by the unsupervised learning machine learned model using processor **110** may be based at least in part on a comparison of extracted features and/or metrics to one or more ground truth content in a data store, such as data stores **106.** As should be appreciated, various techniques may be used and/or implemented to generate and/or curate the one or more ground truth content in data stores **106.** In some examples, processor **110** may turn the training content (e.g., structured essays, unstructured essays) into relational knowledge graphs and/or relational databases to be used, in some examples, as the ground truth for the textual content analysis.

In some examples, based at least on one or more of the metric extraction, feature extraction, relationship extraction, cosine similarity, clustering algorithm, or combinations thereof, processor **110** may determine the content evaluation for the textual content. In some examples, the content evaluation comprises a content score out of a plurality of content scores for the textual content. In some examples, the content score is selected from a plurality of predetermined values.

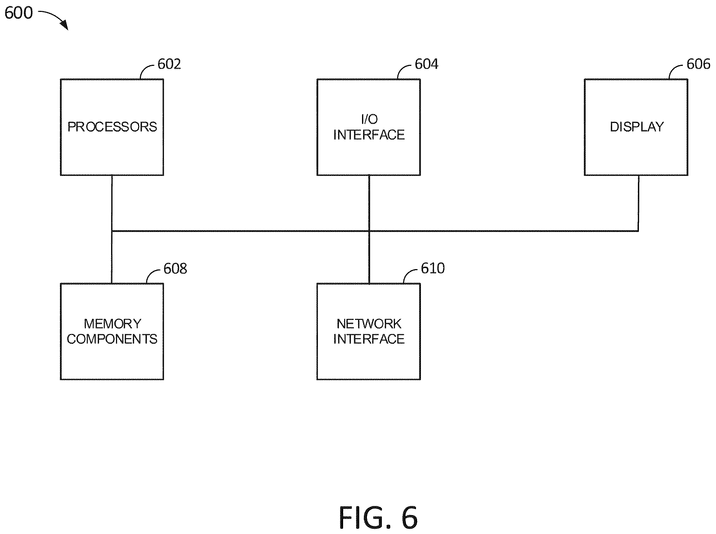

While not shown in FIG. 1, in some examples, a display, such as display **606** of FIG. 6, may provide the content evaluation for the textual content determine by the supervised learning machine learned model using processor **110,** by the supervised learning machine learned model using processor **110,** or combinations thereof, for manual updating. In some examples, the manual updating may include alteration of the content evaluation, including alteration of the content score for the textual content and/or content comments for the textual content.

As should be appreciated, in some examples, the supervised learning machine learned model is used for the analysis and content evaluation determination. In some examples, the unsupervised learning machine learned model is used for the analysis and content evaluation determination. In some examples, a combination of the supervised learning machine learned model and the unsupervised machine learned model is used for the analysis and content evaluation determination.

In some examples, additional and/or alternative machine learned models are used for the analysis and content evaluation determination. In some examples, computing device **108,** and/or processor **110** may determine which machine learned model to use (or both). In some examples, a user (e.g., an instructor) of computing device **108** may determine which machine learned model to use (or both). In some examples, a combination of computing device **108,** and/or processor **110** and/or the user of computing device **108** model to use (or both). In some examples, a user (e.g., an instructor) of computing device **108** may determine which machine learned model to use (or both).

In some examples, the textual content received by computing device **108** may be evaluated, stored in data stores **104,** and subsequently used as additional and/or alternative training textual content.

As one non-limiting example, and in operation, a user (e.g., a student) of user devices **104** may draft textual content (e.g., an essay) using user devices **104.** For example, the user may use a keyboard other input device to type the textual content. The student may then upload the essay to computing device **108,** via network **102.** Another user or an evaluator (e.g., an instructor) of computing device **108** may wish to have the textual content analyzed. Computing device **108** may analyze the essay using a machine learned model utilizing processor **110,** memory **112,** and executable instructions for evaluating content **114.** A content evaluation for the essay (e.g., a score, comments, or a combination thereof) may be determined for the student's essay. A display (e.g., display **606** of FIG. 6) may provide the student's essay, including the score, comments, or a combination thereof, to the instructor for additional, optional, manual alteration. Optionally, the instructor may then send the evaluated essay back to the student, via network **102.** In some examples, the manually altered content evaluation may automatically be sent back to the student, via network **102.**

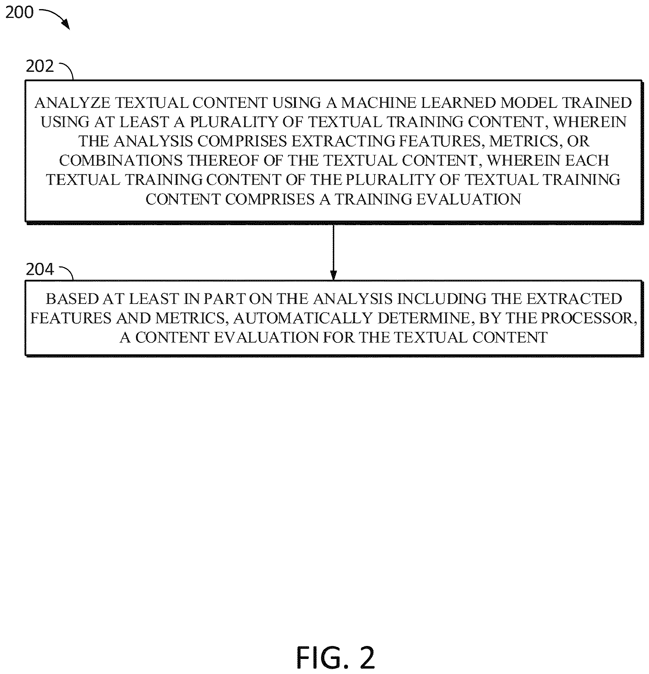

Now turning to FIG. 2, FIG. 2 is a flowchart of a method **200** for content evaluation using machine learning, in accordance with examples described herein. The method 200 may be implemented, for example, using the system **100** of FIG. 1 and/or computing system **600** of FIG. 6.

The method **200** includes analyzing textual content using a machine learned model trained using at least a plurality of textual training content, wherein the analysis comprises extracting features, metrics, or combinations thereof of the textual content, wherein each textual training content of the plurality of textual training content comprises a training evaluation in step **202;** and based at least in part on the analysis including the extracted features and metrics, automatically determining, by the processor, a content evaluation for the textual content in step **204.**

Step **202** includes analyzing textual content using a machine learned model trained using at least a plurality of textual training content, wherein the analysis comprises extracting features, metrics, or combinations thereof of the textual content, wherein each textual training content of the plurality of textual training content comprises a training evaluation. In some examples, the machine learned model is a supervised learning machine learned model. In some examples, the machine leaned model is an unsupervised learning machine learned model.

Step **204** includes, based at least in part on the analysis including the extracted features and metrics, automatically determining, by the processor, a content evaluation for the textual content. In some examples, the content evaluation comprises a content score out of a plurality of content scores for the textual content. In some examples, the content score is a continuous variable. In some examples, the content score is selected from a plurality of predetermined values. As described herein, the lack of machine learning application and implementation with respect to assisting with instructor efficiency in grading, as well as accuracy and reliability of assessment, of a student's work forces teachers and the like to rely exclusively on manual grading for evaluation of a student's work. Oftentimes, such manual review by individual graders is time consuming, leads to variable scores based on who the evaluator is, and can lead to inconsistent results across students. Advantageously, analyzing textual content using a machine learned model is a more desirable approach to content evaluation, as it may facilitate a reduction in time spent on, and enhance the accuracy and reliability of content marking, lead to a more fair and unbiased content evaluation outcome.

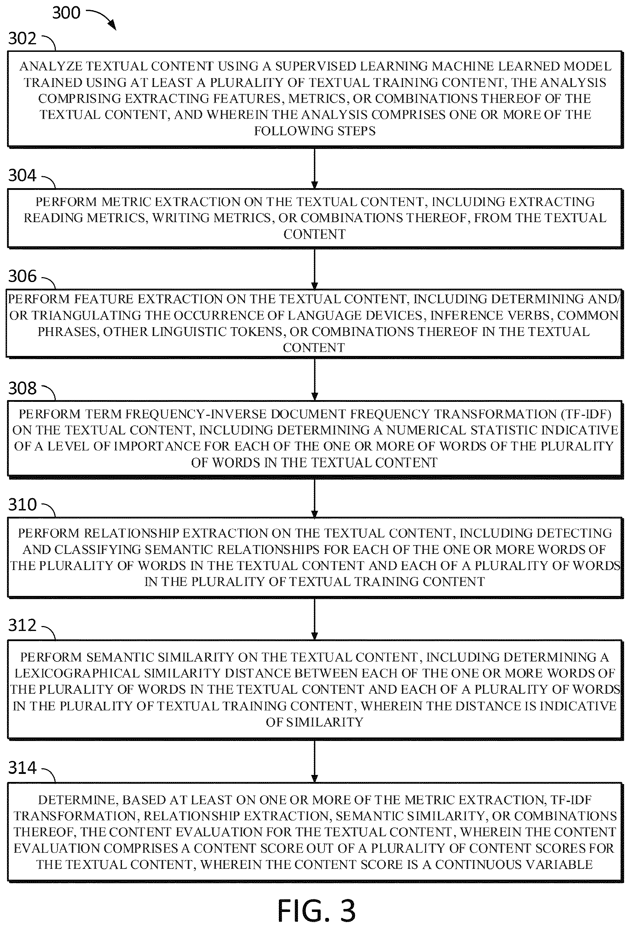

Now turning to FIG. 3, FIG. 3 is a flowchart of a method **300** for content evaluation using machine learning using a supervised learning machine learned model, in accordance with examples described herein. The method **300** may be implemented, for example, using the system **100** of FIG. 1 and/or computing system **600** of FIG. 6.

The method **300** includes analyzing textual content using a supervised learning machine learned model trained using at least a plurality of textual training content, the analysis comprising extracting features, metrics, or combinations thereof of the textual content, and wherein the analysis comprises one or more of the following steps in step **302;** performing metric extraction on the textual content, including extracting reading metrics, writing metrics, or combinations thereof, from the textual content in step **304;** performing feature extraction on the textual content, including determining the occurrence of language devices, inference verbs, common phrases, or combinations thereof in the textual content in step **306;** performing term frequency-inverse document frequency transformation (TF-IDF) on the textual content, including determining a numerical statistic indicative of a level of importance for each of the one or more of words of the plurality of words in the textual content in step **308;** performing relationship extraction on the textual content, including detecting and classifying a semantic relationship for each of the one or more words of the plurality of words in the textual content and each of a plurality of words in the plurality of textual training content in step **310;** performing semantic similarity on the textual content, including determining a lexicographical similarity distance between each of the one or more words of the plurality of words in the textual content and each of a plurality of words in the plurality of textual training content, wherein the distance is indicative of similarity in step **312;** and determining, based at least on one or more of the metric extraction, TF-IDF transformation, relationship extraction, semantic similarity, or combinations thereof, the content evaluation for the textual content, wherein the content evaluation comprises a content score out of a plurality of content scores for the textual content, wherein the content score is a continuous variable in step **314.**

Step **302** includes analyzing textual content using a supervised learning machine learned model trained using at least a plurality of textual training content, the analysis comprising extracting features, metrics, or combinations thereof of the textual content, and wherein the analysis comprises one or more of the following steps.

Step **304** includes performing metric extraction on the textual content, including extracting reading metrics, writing metrics, or combinations thereof, from the textual content.

Step **306** performing feature extraction on the textual content, including determining the occurrence of language devices, inference verbs, common phrases, or combinations thereof in the textual content. As described herein, in some examples, the reading metrics are indicative of reading comprehension, including an understanding, an interpretation, or combinations thereof, of the textual content. In some examples, the reading metrics may be topic-specific. In some examples, the writing metrics are indicative of writing style, grammar, usage, structure, or combinations thereof. In some examples, the writing metrics may be topic-agnostic.

Step **308** includes performing term frequency-inverse document frequency transformation (TF-IDF) on the textual content, including determining a numerical statistic indicative of a level of importance for each of the one or more of words of the plurality of words in the textual content.

Step **310** includes performing relationship extraction on the textual content, including detecting and classifying a semantic relationship for each of the one or more words of the plurality of words in the textual content and each of a plurality of words in the plurality of textual training content.

Step **312** performing semantic similarity on the textual content, including determining a lexicographical similarity distance between each of the one or more words of the plurality of words in the textual content and each of a plurality of words in the plurality of textual training content, wherein the distance is indicative of similarity. In some examples, the semantic similarity is further based on a word mover's distance (WMD) algorithm.

Step **314** includes determining, based at least on one or more of the metric extraction, TF-IDF transformation, relationship extraction, semantic similarity, or combinations thereof, the content evaluation for the textual content, wherein the content evaluation comprises a content score out of a plurality of content scores for the textual content, wherein the content score is a continuous variable.

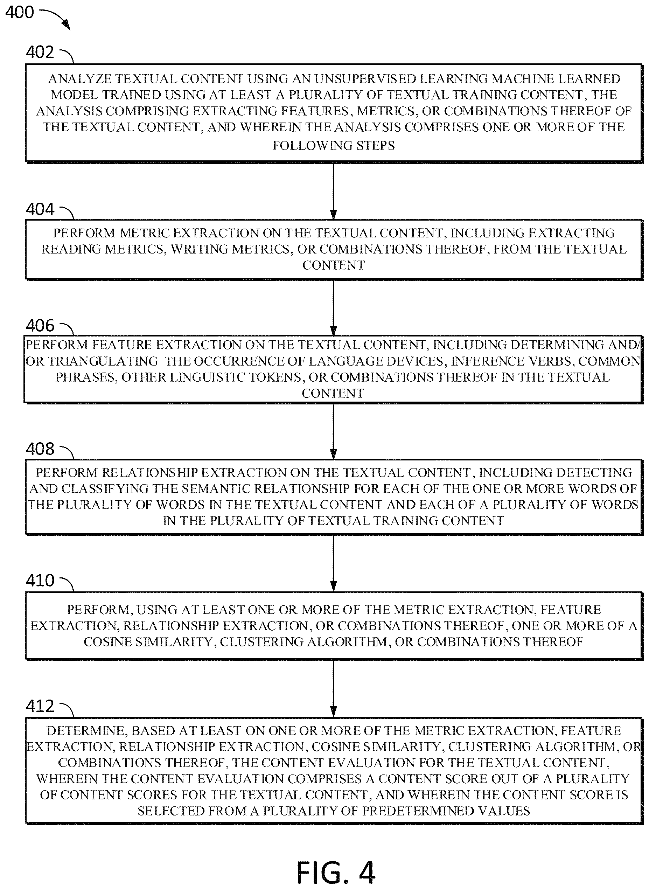

Now turning to FIG. 4, FIG. 4 is a flowchart of a method **400** for content evaluation using machine learning using an unsupervised learning machine learned model, in accordance with examples described herein. The method **400** may be implemented, for example, using the system **100** of FIG. 1 and/or computing system **600** of FIG.

The method **400** includes analyzing textual content using an unsupervised learning machine learned model trained using at least a plurality of textual training content, the analysis comprising extracting features, metrics, or combinations thereof of the textual content, and wherein the analysis comprises one or more of the following steps in step **402;** performing metric extraction on the textual content, including extracting reading metrics, writing metrics, or combinations thereof, from the textual content in step **404;** performing feature extraction on the textual content, including determining the occurrence of language devices, inference verbs, common phrases, or combinations thereof in the textual content in step **406;** performing relationship extraction on the textual content, including detecting and classifying a semantic relationship for each of the one or more words of the plurality of words in the textual content and each of a plurality of words in the plurality of textual training content in step **408;** performing, using at least one or more of the metric extraction, feature extraction, relationship extraction, or combinations thereof, one or more of a cosine similarity, clustering algorithm, or combinations thereof in step **410;** and determining, based at least on one or more of the metric extraction, feature extraction, relationship extraction, cosine similarity, clustering algorithm, or combinations thereof, the content evaluation for the textual content, wherein the content evaluation comprises a content score out of a plurality of content scores for the textual content, and wherein the content score is selected from a plurality of predetermined values in step **412.**

Step **402** includes analyzing textual content using an unsupervised learning machine learned model trained using at least a plurality of textual training content, the analysis comprising extracting features, metrics, or combinations thereof of the textual content, and wherein the analysis comprises one or more of the following steps.

Step **404** includes performing metric extraction on the textual content, including extracting reading metrics, writing metrics, or combinations thereof, from the textual content. As described herein, in some examples, the reading metrics are indicative of reading comprehension, including an understanding, an interpretation, or combinations thereof, of the textual content. In some examples, the reading metrics may be topic-specific. In some examples, the writing metrics are indicative of writing style, grammar, usage, structure, or combinations thereof. In some examples, the writing metrics may be topic-agnostic, i.e., may apply across a range of topics or subjects, which may be contrasted with other variables which may be at least partially topic dependent.

Step **406** performing feature extraction on the textual content, including determining the occurrence of language devices, inference verbs, common phrases, or combinations thereof in the textual content.

Step **408** includes performing relationship extraction on the textual content, including detecting and classifying a semantic relationship for each of the one or more words of the plurality of words in the textual content and each of a plurality of words in the plurality of textual training content.

Step **410** includes performing, using at least one or more of the metric extraction, feature extraction, relationship extraction, or combinations thereof, one or more of a cosine similarity, clustering algorithm, or combinations thereof. In some examples, the clustering algorithm is an agglomerative clustering algorithm.

Step **412** determining, based at least on one or more of the metric extraction, feature extraction, relationship extraction, cosine similarity, clustering algorithm, or combinations thereof, the content evaluation for the textual content, wherein the content evaluation comprises a content score out of a plurality of content scores for the textual content, and wherein the content score is selected from a plurality of predetermined values.

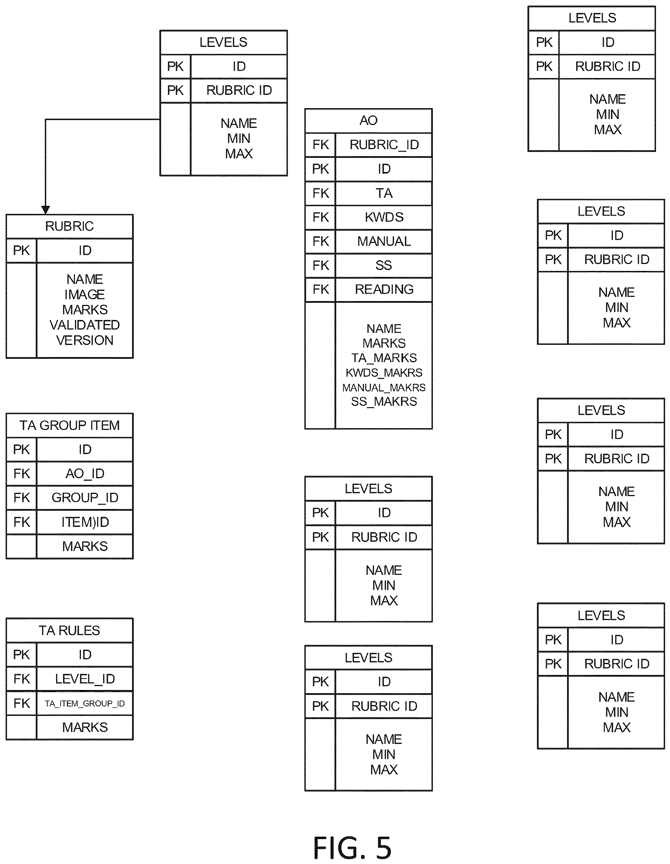

Now turning to FIG. 5, FIG. 5 is a block diagram of ground truth content in a structured relational knowledge graph in a relational data store, in accordance with examples descried herein. As described herein, in some examples, the analysis of the textual content by the supervised learning machine learned model and/or the unsupervised learning machine learned model, using a processor, such as processor **110** of FIG. 1, may be based at least in part on a comparison of extracted features and/or metrics to one or more ground truth content in a data store, such as data stores **106** of FIG. 1. As noted herein, various techniques may be used and/or implemented to generate and/or curate the one or more ground truth content in data stores **106.** In some examples, processor **110** may turn the training content (e.g., structured essays, unstructured essays) into relational knowledge graphs and/or relational databases to be used, in some examples, as the ground truth for the textual content analysis.

In some examples, relational knowledge graph **500** may include rubric **502,** levels **504,** AO **506,** item **508,** manual **510,** semantic similarity **512,** semantic similarity rules **514,** keywords **516,** keyword rules **518,** TA group item **520,** and/or TA rules **522.** Each of levels **504,** AO **506,** item **508,** manual **510,** semantic similarity **512,** semantic similarity rules **514,** keywords **516,** keyword rules **518,** TA group item **520,** and/or TA rules **522,** or combinations thereof, may be used to generate a ground truth rubric, such as rubric **502.**

In some examples, the one or more ground truth content such as relational knowledge graphs and/or relational databases described herein may be generated using natural language processing (NLP). In some examples, a document (e.g., training content, textual content, etc.) ingestion pipeline may be used to receive, fetch, etc. training and/or textual content to use for ground truth. In some examples, the training and/or textual content may be provided by a user (e.g., student, teacher, administrator, end user, customer, client, etc.). In some examples, the ingestion pipeline may fetch the training and/or textual content.

In some examples, an NLP tool and accompanying library and, in some cases, dependency parsing, may be used to provide a set of annotations, such as, for example, sentence segmentation, tokenization, stemming, lemmatization, part of speech tagging, and/or dependency parsing. The dependency parsing, may, in some examples, provide for a crosslinguistically consistent description of grammatical relations among tokens in a sentence that may, in some examples, be easily understood and/or used by users without linguistic knowledge.

In some examples, a named entity recognition (NER) model may be used for recognizing entities (e.g., key entities) in the training and/or textual content. In some examples, a graph model (e.g., proper graph model) may be used to store hidden structures extracted from the training and/or textual content (e.g., an essay) to query data structure. In some examples, a graph database may be used for persisting the dependency relationships as an intermediate step. In some examples, an additional and/or alternative graph database may be used for storing inferred knowledge graph. In some examples, relevant knowledge may be kept in one database as a knowledge graph, and detailed metadata may be kept in the same and/or an alternative database. In some examples, a visualization tool may be used on top of the knowledge graph to deliver, e.g., via display **606** of FIG. 6, insights to a user (e.g., customer, end user, administrator, teacher, student, etc.).

As one example, and in operation, ground truth may be generated and/or curated by, using for example, processor **110** of FIG. 1, the ingestion pipeline receiving and/or fetching training and/or textual content from one or more sources as described herein. An NLP tool with, in some examples, and NER may extract entities from the received or fetched training and/or textual content. A token occurrence writer may, in some examples, write a token dependency graph (e.g., into a metadata database). A rule based relation extraction tool may extract relationships based on provided rules, in, for example, a JSON (or other applicable) format. A keyword extraction tool may, in some examples, run keyword and key phrase extraction algorithm(s) to extract keywords and/or key phrases from the training and/or textual content. The results may, in some examples, be stored as a knowledge graph, such as structured relational knowledge graph **500** of FIG. 5. In this way, a knowledge graph, such as structured relational knowledge graph **500** of FIG. 5, may be generated (in some examples, automatically) from received and/or fetched training and/or textual content rather than relying on humancurated knowledge.

Now turning to FIG. 6, FIG. 6 is a schematic diagram of an example computing system **600** for implementing various embodiments in the examples described herein. Computing system **600** may be used to implement the user devices 104, computing device **108,** or it may be integrated into one or more of the components of system **100,** such user devices **104** and/or computing device **108.** Computing system **600** may be used to implement or execute one or more of the components or operations disclosed in FIGs. 1-4. In FIG. 6, computing system **600** may include one or more processors **602,** an input/output (I/O) interface **604,** a display **606,** one or more memory components **608,** and a network interface **610.** Each of the various components may be in communication with one another through one or more buses or communication networks, such as wired or wireless networks.

Processors **602** may be implemented using generally any type of electronic device capable of processing, receiving, and/or transmitting instructions. For example, processors **602** may include or be implemented by a central processing unit, microprocessor, processor, microcontroller, or programmable logic components (e.g., FPGAs). Additionally, it should be noted that some components of computing system **600** may be controlled by a first processor and other components may be controlled by a second processor, where the first and second processors may or may not be in communication with each other.

Memory components **608** may be used by computing system **600** to store instructions, such as executable instructions discussed herein, for the processors **602,** as well as to store data, such as textual training content, textual content, and the like. Memory components **608** may be, for example, magneto-optical storage, read-only memory, random access memory, erasable programmable memory, flash memory, or a combination of one or more types of memory components.

Display **606** provides a content evaluation, in some examples, including a content score and/or content comments, to a user of computing device **108** of FIG. 1 for manual alteration. Optionally, display **606** may act as an input element to enable a user of computing device **108** to manually alter the content evaluation, or any other component in system **100** as described in the present disclosure. Display **606** may be a liquid crystal display, plasma display, organic light-emitting diode display, and/or other suitable display. In embodiments where display **606** is used as an input, display **606** may include one or more touch or input sensors, such as capacitive touch sensors, a resistive grid, or the like.

The I/O interface **604** allows a user to enter data into the computing system **600,** as well as provides an input/output for the computing system **600** to communicate with other devices or services, user devices 104 and/or computing device 108 of FIG. 1. I/O interface **604** can include one or more input buttons, touch pads, track pads, mice, keyboards, audio inputs (e.g., microphones), audio outputs (e.g., speakers), and so on.

Network interface **610** provides communication to and from the computing system **600** to other devices. For example, network interface **610** may allow user devices **104** to communicate with computing device **108** through a communication network, such as network **102** of FIG. 1. Network interface **610** includes one or more communication protocols, such as, but not limited to Wi-Fi, Ethernet, Bluetooth, cellular data networks, and so on. Network interface **610** may also include one or more hardwired components, such as a Universal Serial Bus (USB) cable, or the like. The configuration of network interface **610** depends on the types of communication desired and may be modified to communicate via Wi-Fi, Bluetooth, and so on.

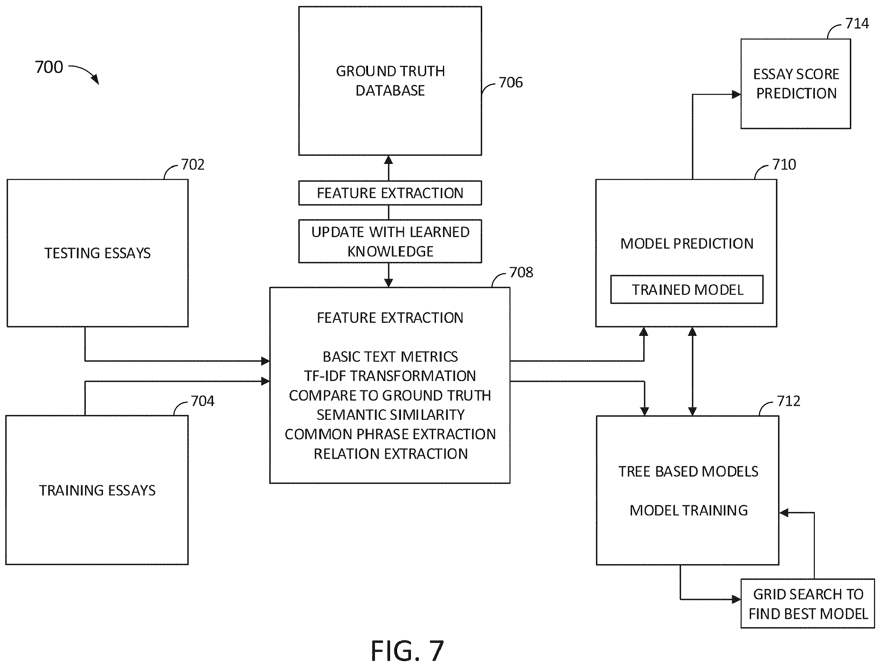

Turning now to FIG. 7, FIG 7 is a block diagram illustrating content evaluation system **700** using machine learning as described herein. Content evaluation system **700** is described herein, and in some examples may include testing essays (e.g., textual content) **702,** training essays (e.g., training textual content) **704,** ground truth database **706,** feature extraction **708,** model prediction **710,** tree based models and model training **712,** and essay score prediction **714.**

As should be appreciated, embodiments and examples described herein generally relate to systems and methods for content evaluation, and more specifically, for analyzing textual content, such as essays, written work product, or the like, to determine a textual content evaluation, comprising a content score, using a machine learned model trained via supervised learning, unsupervised learning, or combinations thereof. In some examples, a machine learned model (e.g., a machine learning computer model) may be configured to evaluative (e.g., automatically in some examples) textual content including but not limited to open-ended textual responses to a prompt.

In some examples, the machine learned model may comprise an active learning interface that may be configured to collect and/or extract input features (e.g., input features manually input and/or hard coded by a user). In some examples, users may include but are not limited to teachers, administrators, students, and the like.

In some examples, the machine learned model may comprise an active learning interface that allows users (e.g., humans, etc.) to control input features and desired output features.

In some examples, the machine learned model may comprise an automated ground truth relation database generator.

In some examples, the machine learned model may comprise a machine learned model that compares to input textual.

In some examples, the machine learned model may comprise a predictive in-text domain-specific entity recognition engine.

In some examples, the machine learned model may comprise a surface-level language checker engine.

In some examples, the machine learned model may comprise a domain-specific predictive content evaluation engine.

In some examples, the machine learned model may comprise an automated diagnostic feedback generator.

In some examples, the machine learned model may comprise a diagnostic text-analytics dashboard, which in some examples, may include a graphical user interface (e.g., GUI) that in some examples may be displayed by, for example, display **606** of Fig. 6.

In some examples, the machine learned model may comprise an adaptive game-based learning engine.

In some examples, a machine learned model and/or computer assisted model may be configured to identify technical accuracy, strengths, and weaknesses of textual content, including for example, open ended textual responses to a prompt, questions, or the like. In some examples, the computer assisted model may be further configured to generate diagnostic feedback in relation to the technical accuracy, strengths, and weaknesses. In some examples, the computer assisted model may be further configured to identify content (e.g., textual content, training textual content, etc.) related to at least the strengths and weaknesses. In some examples, the computer assisted model may be further configured to generate (e.g., automatically, manually, etc.) diagnostic domain-specific feedback wherein the content strengths and weaknesses are generated by utilizing, for example, transfer learning. In some examples, transfer learning may be based on one or more transformer models, each comprised of, in some examples, an encoder, a decoder, or combinations thereof, such as but not limited to BERT or generative pre-trained transformer three (GTP-3).

In some examples, the computer assisted model may be further configured to auto-tag and/or automatically tag within domain-specific entities by using a supervised learning machine learned model trained on data collected on a user interface. In some examples, the computer assisted model may be further configured to generate feedback based on what has been auto-tagged. In some examples, the computer assisted model may be further configured to auto-tag and/or automatically tag domain-specific entities for the purpose of analyzing and/or evaluating text to generate domain-specific feedback. In some examples, the computer assisted model may be further configured to rank order(s) written content in order of similarity against, for example, exemplar textual content in relation to a plurality of reading metrics, writing metrics, or combinations thereof.

In some examples, the computer assisted model and/or the machine learned models described herein may perform, or assist in performing the following operations: receiving one or more exemplar essays (e.g., rubrics, training textual contents, etc.), extracting metrics from the exemplar essays, rank order the extracted metrics in order of predictions (e.g., grade), generate a mark (e.g., score), and generate feedback on the extracted metrics against the exemplar essay.

In some examples, the computer assisted model may be further configured to generate a computer-assisted grade and computer-generated feedback. In some examples, the computer model may further extract the metrics from one or more exemplar essays, texts, textual responses, and the like, and compare the submitted textual responses to the exemplar textual response. In some examples, the metrics mean both content-related and technical accuracy metrics. In some examples, the productiveness means to create weightings used to model the computer-generated grade and feedback.

In some examples, a user interface as described herein may be configured to feed data collected from users into a ground truth database. In some examples, the data fed into the ground truth database may power a supervised machine learned model, wherein the data includes but is not limited to grades, scores, marks, technical accuracy feedback, and/or domain-specific content evaluation feedback, and the like, or combinations thereof.

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the scope of the invention.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

As used herein and unless otherwise indicated, the terms "a" and "an" are taken to mean "one", "at least one" or "one or more". Unless otherwise required by context, singular terms used herein shall include pluralities and plural terms shall include the singular.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended scope of the present system as set forth in the claims that follow. Accordingly, the specification and drawings are to be regarded in an illustrative manner and are not intended to limit the scope of the appended claims.

Aspects and features of the present disclosure are set out in the following numbered clauses.
1. A method for evaluating textual content, the method comprising:
   analyzing, by a processor communicatively coupled to memory, textual content using a machine learned model trained using at least a plurality of textual training content, wherein the analysis comprises extracting features, metrics, or combinations thereof of the textual content, wherein the textual content comprises one or more words of a plurality of words, and wherein each textual training content of the plurality of textual training content comprises a training evaluation; and
   based at least in part on the analysis including the extracted features and metrics, automatically determining, by the processor, a content evaluation for the textual content.
2. The method of clause 1, further comprising
   providing, by a display communicatively coupled to the processor, the content evaluation for manual updating, wherein the manual updating includes alteration of the content evaluation, wherein the content evaluation comprises a content score out of a plurality of content scores for the textual content.
3. The method of clause 1, wherein the machine learned model is a supervised learning machine learned model, and wherein the analysis of the textual content using the supervised learning machine learned model comprises one or more of the following:
   performing, by the processor, metric extraction on the textual content, wherein the metric extraction includes extracting reading metrics, writing metrics, or combinations thereof, from the textual content;
   performing, by the processor, feature extraction on the textual content, wherein the feature extraction includes determining and/or triangulating the occurrence of language devices, inference verbs, common phrases, other linguistic tokens, or combinations thereof in the textual content;
   performing, by the processor, term frequency-inverse document frequency transformation (TF-IDF) on the textual content, wherein the TF-IDF includes determining a numerical statistic indicative of a level of importance for each of the one or more of words of the plurality of words in the textual content;
   performing, by the processor, relationship extraction on the textual content, wherein the relationship extraction includes detecting and classifying semantic relationships for each of the one or more words of the plurality of words in the textual content and each of a plurality of words in the plurality of textual training content;
   performing, by the processor, semantic similarity on the textual content, wherein the semantic similarity includes determining a lexicographical similarity distance between each of the one or more words of the plurality of words in the textual content and each of a plurality of words in the plurality of textual training content, wherein the distance is indicative of similarity; or
   determining, by the processor and based at least on one or more of the metric extraction, TF-IDF transformation, relationship extraction, semantic similarity, or combinations thereof, the content evaluation for the textual content, wherein the content evaluation comprises a content score out of a plurality of content scores for the textual content, wherein the content score is a continuous variable.
4. The method of clause 3, further comprising performing, by the processor, relationship extraction on the textual content, wherein the relationship extraction includes detecting and classifying semantic relationships between lexical tokens for each of the one or more lexical tokens in the textual content and each of a plurality of lexical tokens in the plurality of textual training content, wherein each the textual content and the textual training content further comprise one or more of the plurality of lexical training tokens.
5. The method of clause 4, further comprising performing, by the processor, techniques comprising bidirectional encoder representations from transformers (BERT), chunking, tokenization, lemmatization, or combinations thereof, to determine the numerical statistic indicative of the level of importance for each of the one or more of words of the plurality of words in the textual content.
6. The method of clause 3, wherein the reading metrics are indicative of reading comprehension, including an understanding, an interpretation, or combinations thereof, of the textual content, wherein the reading metrics are topic-specific.
7. The method of clause 3, wherein the writing metrics are indicative of writing style, grammar, usage, structure, or combinations thereof, wherein the writing metrics are topic-agnostic.
8. The method of clause 3, wherein the semantic similarity is further based on a word mover's distance (WMD) algorithm.
9. The method of clause 1, wherein the machine learned model is an unsupervised learning machine learned model, and wherein the analysis of the textual content using the unsupervised learning machine learned model comprises one or more of the following:
   performing, by the processor, metric extraction on the textual content, wherein the metric extraction includes extracting reading metrics, writing metrics, or combinations thereof, from the textual content;
   performing, by the processor, feature extraction on the textual content, wherein the feature extraction includes determining and/or triangulating the occurrence of language devices, inference verbs, common phrases, other linguistic tokens, or combinations thereof in the textual content;
   performing, by the processor, relationship extraction on the textual content, wherein the relationship extraction includes detecting and classifying the semantic relationship for each of the one or more words of the plurality of words in the textual content and each of a plurality of words in the plurality of textual training content;
   performing, by the processor and using at least one or more of the metric extraction, feature extraction, relationship extraction, or combinations thereof, one or more of a cosine similarity, clustering algorithm, or combinations thereof; or
   determining, by the processor and based at least on one or more of the metric extraction, feature extraction, relationship extraction, cosine similarity, clustering algorithm, or combinations thereof, the content evaluation for the textual content, wherein the content evaluation comprises a content score out of a plurality of content scores for the textual content, and wherein the content score is selected from a plurality of predetermined values.
10. The method of clause 9, further comprising performing, by the processor, relationship extraction on the textual content, wherein the relationship extraction includes detecting and classifying semantic relationships between lexical tokens for each of one or more lexical tokens in the textual content and each of a plurality of lexical tokens in the plurality of textual training content, wherein each the textual content and the textual training content further comprise one or more of the plurality of lexical training tokens.
11. The method of clause 9, wherein the analysis of the textual content may be further based at least on one or more natural language models.
12. The method of clause 9, wherein the clustering algorithm is an agglomerative clustering algorithm.
13. The method of clause 9, further comprising:
   performing, by the processor, a normalization on at least one of the metric extraction, feature extraction, relationship extraction, or combinations thereof.
14. The method of clause 1, wherein the textual content comprises academic content, written content, one or more images, an essay, an article, a dissertation, a manuscript, a paper, a thesis, a treatise, an exposition, a composition, or combinations thereof.
15. The method of clause 1, wherein the textual training content comprises academic content, written content, one or more images, an essay, an article, a dissertation, a manuscript, a paper, a thesis, a treatise, an exposition, a composition, or combinations thereof.
16. The method of clause 1, wherein the textual content is generated by a user in response to a prompt associated with a first topic, and wherein the content evaluation for the textual content is based at least in part on an assessment of the user's understanding of the first topic.
17. At least one non-transitory computer readable medium encoded with instructions that, when executed, cause a system to perform actions for evaluating textual content, the actions comprising:
   analyzing the textual content using a machine learned model trained using textual training content; and
   based at least in part on the analysis, automatically determining a content evaluation for the textual content.
18. The non-transitory computer readable medium of clause 17, wherein the machine learned model is a supervised learning machine learned model, wherein the content evaluation comprises a content score out of a plurality of content scores for the textual content, and wherein the content score is a continuous variable.
19. The non-transitory computer readable medium of clause 17, wherein the machine learned model is an unsupervised learning machine learned model, wherein the content evaluation comprises a content score out of a plurality of content scores for the textual content, and wherein the content score is selected from a plurality of predetermined values.
20. The non-transitory computer readable medium of clause 17, the actions further comprising:
   providing the content evaluation for the textual content for manual updating, wherein the manual updating includes alteration of the content evaluation.
21. The non-transitory computer readable medium of clause 17, wherein the textual content comprises academic content, written content, one or more images, an essay, an article, a dissertation, a manuscript, a paper, a thesis, a treatise, an exposition, a composition, or combinations thereof, and wherein the textual training content comprises academic content, written content, one or more images, an essay, an article, a dissertation, a manuscript, a paper, a thesis, a treatise, an exposition, a composition, or combinations thereof.
22. A system for evaluating textual content, the system comprising:
   a processor, communicatively coupled to a user device, and configured to receive textual content produced by user from the user device, wherein the textual content comprises one or more words of a plurality of words and is generated in response to prompt based on a topic;
   the processor, communicatively coupled to memory, further configured to analyze the textual content using a machine learned model; and
   the processor, further configured to, based on the analysis, determine a content evaluation for the textual content, wherein the content evaluation is based in part on an assessment of an understanding by the user of the topic.
23. The system of clause 22, wherein the content evaluation for the textual content is indicative of the user's grammatical usage in the textual content.
24. The system of clause 22, wherein the machine learned model is a supervised learning machine learned model, wherein the content evaluation comprises a content score out of a plurality of content scores for the textual content, and wherein the content score is a continuous variable.
25. The system of clause 22, wherein the machine learned model is an unsupervised learning machine learned model, wherein the content evaluation comprises a content score out of a plurality of content scores for the textual content, and wherein the content score is selected from a plurality of predetermined values.
26. The system of clause 22, wherein the system further comprises:
   a display, communicatively coupled to the processor, and configured to provide the content evaluation for manual updating, wherein the manual updating includes alteration of the content evaluation.
27. A system configured to perform the method of any preceding clause.
28. A computer-readable medium comprising instructions which, when executed by a processing element of a computing device, cause the computing device to perform the method of any preceding clause.

## Claims

1. A method for evaluating textual content, the method comprising:
analyzing, by a processor communicatively coupled to memory, textual content using a machine learned model trained using at least a plurality of textual training content, wherein the analysis comprises extracting features, metrics, or combinations thereof of the textual content, wherein the textual content comprises one or more words of a plurality of words, and wherein each textual training content of the plurality of textual training content comprises a training evaluation; and
based at least in part on the analysis including the extracted features and metrics, automatically determining, by the processor, a content evaluation for the textual content.

2. The method of claim 1, further comprising
providing, by a display communicatively coupled to the processor, the content evaluation for manual updating, wherein the manual updating includes alteration of the content evaluation, wherein the content evaluation comprises a content score out of a plurality of content scores for the textual content.

3. The method of claim 1 or claim 2, wherein the machine learned model is a supervised
learning machine learned model, and wherein the analysis of the textual content using the supervised learning machine learned model comprises one or more of the following:
performing, by the processor, metric extraction on the textual content, wherein the metric extraction includes extracting reading metrics, writing metrics, or combinations thereof, from the textual content;
performing, by the processor, feature extraction on the textual content, wherein the feature extraction includes determining and/or triangulating the occurrence of language devices, inference verbs, common phrases, other linguistic tokens, or combinations thereof in the textual content;
performing, by the processor, term frequency-inverse document frequency transformation (TF-IDF) on the textual content, wherein the TF-IDF includes determining a numerical statistic indicative of a level of importance for each of the one or more of words of the plurality of words in the textual content;
performing, by the processor, relationship extraction on the textual content, wherein the relationship extraction includes detecting and classifying semantic relationships for each of the one or more words of the plurality of words in the textual content and each of a plurality of words in the plurality of textual training content;
performing, by the processor, semantic similarity on the textual content, wherein the semantic similarity includes determining a lexicographical similarity distance between each of the one or more words of the plurality of words in the textual content and each of a plurality of words in the plurality of textual training content, wherein the distance is indicative of similarity; or
determining, by the processor and based at least on one or more of the metric extraction, TF-IDF transformation, relationship extraction, semantic similarity, or combinations thereof, the content evaluation for the textual content, wherein the content evaluation comprises a content score out of a plurality of content scores for the textual content, wherein the content score is a continuous variable.

4. The method of claim 3, further comprising performing, by the processor, relationship extraction on the textual content, wherein the relationship extraction includes detecting and classifying semantic relationships between lexical tokens for each of the one or more lexical tokens in the textual content and each of a plurality of lexical tokens in the plurality of textual training content, wherein each the textual content and the textual training content further comprise one or more of the plurality of lexical training tokens;
wherein the method optionally further comprises performing, by the processor, techniques comprising bidirectional encoder representations from transformers (BERT), chunking, tokenization, lemmatization, or combinations thereof, to determine the numerical statistic indicative of the level of importance for each of the one or more of words of the plurality of words in the textual content.

5. The method of claim 3 or claim 4, wherein the reading metrics are indicative of reading comprehension, including an understanding, an interpretation, or combinations thereof, of the textual content, wherein the reading metrics are topic-specific; and/or
wherein the writing metrics are indicative of writing style, grammar, usage, structure, or combinations thereof, wherein the writing metrics are topic-agnostic.

6. The method of any of claims 3 to 5, wherein the semantic similarity is further based on a word mover's distance (WMD) algorithm.

7. The method of claim 1 or claim 2, wherein the machine learned model is an unsupervised learning machine learned model, and wherein the analysis of the textual content using the unsupervised learning machine learned model comprises one or more of the following:
performing, by the processor, metric extraction on the textual content, wherein the metric extraction includes extracting reading metrics, writing metrics, or combinations thereof, from the textual content;
performing, by the processor, feature extraction on the textual content, wherein the feature extraction includes determining and/or triangulating the occurrence of language devices, inference verbs, common phrases, other linguistic tokens, or combinations thereof in the textual content;
performing, by the processor, relationship extraction on the textual content, wherein the relationship extraction includes detecting and classifying the semantic relationship for each of the one or more words of the plurality of words in the textual content and each of a plurality of words in the plurality of textual training content;
performing, by the processor and using at least one or more of the metric extraction, feature extraction, relationship extraction, or combinations thereof, one or more of a cosine similarity, clustering algorithm, or combinations thereof; or
determining, by the processor and based at least on one or more of the metric extraction, feature extraction, relationship extraction, cosine similarity, clustering algorithm, or combinations thereof, the content evaluation for the textual content, wherein the content evaluation comprises a content score out of a plurality of content scores for the textual content, and wherein the content score is selected from a plurality of predetermined values.

8. The method of claim 7, further comprising performing, by the processor, relationship extraction on the textual content, wherein the relationship extraction includes detecting and classifying semantic relationships between lexical tokens for each of one or more lexical tokens in the textual content and each of a plurality of lexical tokens in the plurality of textual training content, wherein each the textual content and the textual training content further comprise one or more of the plurality of lexical training tokens.

9. The method of claim 7 or claim 8, wherein the analysis of the textual content may be further based at least on one or more natural language models; and/or
wherein the clustering algorithm is an agglomerative clustering algorithm.

10. The method of any of claims 7 to 9, further comprising:
performing, by the processor, a normalization on at least one of the metric extraction, feature extraction, relationship extraction, or combinations thereof.

11. The method of any of claims 1 to 10, wherein the textual content comprises academic content, written content, one or more images, an essay, an article, a dissertation, a manuscript, a paper, a thesis, a treatise, an exposition, a composition, or combinations thereof; and/or
wherein the textual training content comprises academic content, written content, one or more images, an essay, an article, a dissertation, a manuscript, a paper, a thesis, a treatise, an exposition, a composition, or combinations thereof; and/or
wherein the textual content is generated by a user in response to a prompt associated with a first topic, and wherein the content evaluation for the textual content is based at least in part on an assessment of the user's understanding of the first topic.

12. At least one computer readable medium encoded with instructions that, when executed, cause a system to perform actions for evaluating textual content, the actions comprising:
analyzing the textual content using a machine learned model trained using textual training content; and
based at least in part on the analysis, automatically determining a content evaluation for the textual content.

13. The computer readable medium of claim 12, wherein the instructions, when executed, cause the system to perform the method of any of claims 1 to 11.

14. A system for evaluating textual content, the system comprising:
a processor, communicatively coupled to a user device, and configured to receive textual content produced by user from the user device, wherein the textual content comprises one or more words of a plurality of words and is generated in response to prompt based on a topic;
the processor, communicatively coupled to memory, further configured to analyze the textual content using a machine learned model; and
the processor, further configured to, based on the analysis, determine a content evaluation for the textual content, wherein the content evaluation is based in part on an assessment of an understanding by the user of the topic.

15. The computer readable medium of claim 12 or claim 13, or the system of claim 14, wherein the machine learned model is a supervised learning machine learned model, wherein the content evaluation comprises a content score out of a plurality of content scores for the textual content, and wherein the content score is a continuous variable; or
wherein the machine learned model is an unsupervised learning machine learned model, wherein the content evaluation comprises a content score out of a plurality of content scores for the textual content, and wherein the content score is selected from a plurality of predetermined values.
